(19) Europäisches Patentamt
European Patent Office
Office européen des brevets

(11) Publication number: **0 115 031**
**A1**

(12) # EUROPEAN PATENT APPLICATION

(21) Application number: **83112834.3**

(22) Date of filing: **20.12.83**

(51) Int. Cl.³: **C 01 B 33/28**
C 01 B 33/20

(30) Priority: **23.12.82 US 452439**

(43) Date of publication of application:
**08.08.84 Bulletin 84/32**

(84) Designated Contracting States:
**AT BE CH DE FR GB IT LI NL SE**

(71) Applicant: **UNION CARBIDE CORPORATION**
**Old Ridgebury Road**
**Danbury Connecticut 06817(US)**

(72) Inventor: **Messina, Celeste Anne**
**20 Somerstown Road**
**Ossining New York 10562(US)**

(72) Inventor: **Lok, Brent Mei-Tak**
**17A Deerwood Drive**
**New City New York 10956(US)**

(74) Representative: **Eggert, Hans-Gunther, Dr.**
**Räderscheidtstrasse 1**
**D-5000 Köln 41(DE)**

(54) **Ferrosilicate molecular sieve composition.**

(57) Crystalline ferrosilicate compositions which exhibit adsorptive, ion-exchange and catalytic properties.

EP 0 115 031 A1

# FERROSILICATE MOLECULAR SIEVE COMPOSITION

## FIELD OF INVENTION

The present invention relates to crystalline ferrosilicate compositions which exhibit adsorptive, ion-exchange and catalytic properties. Members of the novel class of ferrosilicates of the present invention are generically denominated herein as FeSO-35.

## BACKGROUND OF THE INVENTION

Ferrosilicates having three-dimensional crystalline structures comprised of $SiO_2$ and $FeO_2^-$ tetrahedra have heretofore been reported in U.S.P. 4,208,305, issued June 17, 1980 to Kouwenhoven et al., and in published European Patent Application Publication No. 13,630, claiming priority of U.S. application Serial No. 003,144, filed January 15, 1979 by M. K. Rubin, et al. The latter disclosure concerns the preparation of silicates which contain iron and/or chromium and which can optionally contain aluminum. These silicates are said to be novel forms of the zeolite ZSM-12. The former disclosure is more general in its description, but the two species characterized therein by x-ray powder diffraction patterns appear to have a close structural relationship to zeolite ZSM-5 and the zeolite mineral ferrierite, respectively. In both cases the compositions are synthesized hydrothermally from aqueous reaction mixtures which must contain organic templating agents, and which can contain as optional ingredients, alkali metal or alkaline earth metal cations.

Ferrosilicates (denominated as FeSO-38) having three-dimensional crystalline structures are disclosed in copending U.S. Serial No. 433,909, filed October 12, 1982. The ferrosilicates of copending U.S. Serial No. 433,909 are characterized by the following x-ray diffraction pattern:

| 2θ | d(A) | Relative Intensity |
|---|---|---|
| 6.4-6.65 | 13.8-13.3 | M-VS |
| 9.7-9.85 | 9.12-8.98 | S-VS |
| 13.4-13.6 | 6.61-6.51 | M-S |
| 22.2-22.45 | 4.00-3.98 | M-S |
| 25.55-25.8 | 3.486-3.453 | S-VS |
| 27.65-27.85 | 3.226-3.203 | M-S |

SUMMARY OF THE INVENTION

The instant invention relates to a microporous crystalline ferrosilicate composition having uniform pore diameters of greater than about 4.0 angstroms and less than about 5 angstroms. The empirical chemical composition in the anhydrous state and expressed in terms of molar oxide ratios is:

$$a\ M_{2/n}O : [Al_xFe_{(1-x)}]_2O_3 : b\ SiO_2$$

wherein "M" is at least one cation having the valence "n", "a" has a value of from zero to 2.0, "b" has a value of from 5 to 100, "x" has a value of from zero to 0.98, said ferrosilicate having a characteristic X-ray powder diffraction pattern containing at least the d-spacings of Table I, below.

DETAILED DESCRIPTION

The present invention relates to a new class of microporous crystalline ferrosilicate compositions having uniform pore diameters of greater

than about 4.0 angstroms and less than about 5 angstroms, an empirical chemical composition in the anhydrous state and expressed in terms of molar oxide ratios of:

$$a\ M_{2/n}O : [Al_xFe_{(1-x)}]_2O_3 : b\ SiO_2$$

wherein "M" is at least one cation having the valence "n", "a" has a value of from zero to 2.0, "b" has a value of from 5 to 100, "x" has a value of from zero to 0.98, said ferrosilicate having a characteristic X-ray powder diffraction pattern containing at least the d-spacings of Table I, below.

TABLE I

| 2θ | d(A) | Relative Intensity |
|---|---|---|
| 10.9-11.1 | 8.12-7.97 | M-VS |
| 13.4-13.5 | 6.61-6.56 | M-S |
| 17.4-17.5 | 5.10-5.07 | M-S |
| 21.0-21.1 | 4.23-4.21 | M-S |
| 22.0-22.1 | 4.04-4.02 | M-VS |
| 28.6 | 3.121 | M-S |
| 32.3-32.4 | 2.772-2.763 | M-S |

It is preferred that the composition of the ferrosilicate is such that in the empirical chemical formula set forth above, "a" has a value of from zero to 1.0, "b" has a value of from 10 to 80 and "x" has a value of from zero to 0.5. Most preferably "a" has a value of from zero to 1.0, "b" has a value of from 10 to 50 and "x" is essentially zero, i.e., less than 0.01.

All of the FeSO-35 compositions analyzed to date have been further characterized by the x-ray diffraction pattern of Table II:

TABLE II

| 2θ | d(A) | 100 x I/Io |
|---|---|---|
| 8.6-8.8 | 10.28-10.05 | 12-30 |
| 10.9-11.1 | 8.12-7.97 | 42-100 |
| 13.4-13.5 | 6.61-6.56 | 20-68 |
| 16.0-16.1 | 5.54-5.50 | 2-8 |
| 17.4-17.5 | 5.10-5.07 | 35-85 |
| 17.8-17.9 | 4.98-4.96 | sh |
| 21.0-21.1 | 4.23-4.21 | 32-55 |
| 22.0-22.1 | 4.04-4.02 | 39-100 |
| 23.4-23.5 | 3.80-3.79 | 13-27 |
| 25.1 | 3.548 | 5-9 |
| 26.0 | 3.427 | 3-5 |
| 27.0-27.1 | 3.302-3.290 | 2-18 |
| 28.6 | 3.121 | 32-48 |
| 29.3-29.4 | 3.048-3.038 | 8-12 |
| 31.7-31.8 | 2.823-2.814 | sh |
| 32.3-32.4 | 2.772-2.763 | 25-42 |
| 34.6-34.7 | 2.592-2.585 | 9-11 |
| 35.2-35.4 | 2.550-2.536 | 2-15 |
| 36.0-36.3 | 2.495-2.475 | 4-13 |
| 37.2 | 2.417 | 0-2 |
| 37.9-38.0 | 2.374-2.368 | 1-2 |
| 39.7 | 2.270 | 0-3 |
| 42.2 | 2.141 | 2-5 |
| 42.7-43.0 | 2.118-2.103 | 3-10 |
| 44.8-45.1 | 2.023-2.010 | 1-5 |
| 48.0-48.2 | 1.895-1.888 | 2-4 |
| 49.7-50.1 | 1.834-1.821 | 2-5 |
| 51.5-51.8 | 1.774-1.765 | 3-8 |
| 55.4-55.7 | 1.658-1.650 | 3-8 |

sh = shoulder

The X-ray pattern of Tables I and II and all other X-ray patterns appearing hereinafter were obtained using standard X-ray powder diffraction techniques. The radiation source was a high-intensity, copper target, X-ray tube operated at 50 Kv and 40 ma. The diffraction pattern from the copper K alpha radiation and graphite monochromator is suitably recorded by an X-ray spectrometer scintillation counter, pulse height analyzer and strip chart recorder. Flat compressed powder samples are scanned at 2° (2 theta) per

minute, using a two-second time constant. Interplanar spacings (d) are obtained from the position of the diffraction peaks, expressed at 2θ where θ is the Bragg angle, as observed on the strip chart. Intensities are determined from the heights of diffraction peaks after subtracting background. The intensity of the strongest line is designated $I_o$, and is used to determine the relative intensity values by substitution into the formula "100 X $I/I_o$" where I is the intensity of each line other than the strongest line. In some instances the numerical values obtained using the formula are reported in terms of the notations vs, s, m, w and vw which represent very strong, strong, medium, weak and very weak, respectively.

As will be understood by those skilled in the art, the determination of the parameter 2 theta is subject to both human and mechanical error, which in combination, can impose an uncertainty of about ±0.4° on each reported value of 2 theta. This uncertainty is, of course, also manifested in the reported values of the d-spacings in terms of angstrom units, which are calculated from the 2 theta values. This imprecision is general throughout the art and is not sufficient to preclude the differentiation of the present crystalline materials from each other and from the compositions of the prior art.

The FeSO-35 compositions of this invention consist structurally of a three-dimensional network of $SiO_2$, $FeO_2^-$ and optionally $AlO_2^-$ tetrahedra. In the as-synthesized form, electrical neutrality is provided by charge-balancing cations

which are associated with the $FeO_2^-$ and $AlO_2^-$ tetrahedra of the framework structure. Alkali metal, alkaline earth metal, and organic cations derived from the organic templating agent can all be present in the as-synthesized form of FeSO-35 by virtue of being present in the synthesis reaction mixture. Also the organic templating compound can merely be occluded in the pore system of the crystal structure, i.e., not bonded to the crystal lattice, but as an adsorbed or encapsulated phase. Both types of organic constituents are possible in the same structure. The maximum quantity of organic species present is dependent upon the molecular dimensions of the organic molecule or ion and its configuration. In those cases where a cation derived from the organic templating agent has a larger kinetic diameter than the effective pore diameter of the FeSO-35, or occupies a lattice position not accessible to the major pore system, such organic cation is not considered to be ion-exchangeable in the ordinary sense. Such cations can, for the most part, however, be thermally decomposed to form ion-exchangeable ammonium or hydrogen cations by calcination in air at temperatures of from 200°C to 700°C. The bulk of the non-organic cations are ion-exchangeable after access to the inner structure of the FeSO-35 crystals is achieved by substantial removal of pore-blocking organic species, and thus can be replaced by other metal cations as well as $NH_4^+$ and $H^+$ cations. Conventional ion-exchange procedures are applicable. Activation, i.e., dehydration, to remove adsorbed water from the crystals is readily accomplished even at room

temperatures if carried out in a vacuum, but calcination in air at elevated temperatures of up to 700°C is generally more convenient and is preferred for that reason. The FeSO-35 compositions are generally calcined at a temperature in the range of from 350°C up to the crystal destruction temperature of the ferrosilicate.

Although much remains to be learned about the manner in which templating agents influence the crystallization mechanism, it does appear that molecular size and configuration are important factors. It has been discovered that methylquinuclidine serves well as a templating agent in the formation of FeSO-35 materials and hence is preferred. It is contemplated that other organic (including organometallic) compounds will be suitable for the purpose, particularly among the group containing an element of Group VA of the Periodic Classification of the Elements (N, P, As, Sb, and Bi), preferably nitrogen or phosphorus, containing at least one alkyl or aryl radical having between 1 and 7 carbon atoms. Quaternary ammonium compounds and amines are believed to be employable herein. Mixtures of suitable templating agents are also effective in producing FeSO-35 compositions.

FeSO-35 can be prepared from a reaction mixture having a composition in terms of mole ratios of oxides within the following ranges:

$$0\text{-}10\ R_2O:1\text{-}15\ M_{2/n}O:[Al_xFe_{(1-x)}]_2O_3:10\text{-}200\ SiO_2:200\text{-}1000\ H_2O$$

wherein "R" represents an organic templating agent,

preferably an alkyl quinuclidine, amine or quaternary ammonium compound, "M" represents an alkali or alkaline earth metal having the valence "n", and "x" has a value of from zero to 0.98. Preferably the mole ratios of oxides in the reaction mixture are:

$$1\text{-}5\ R_2O:4\text{-}12\ M_{2/n}O:[Al_xFe_{(1-x)}]_2O_3:20\text{-}80\ SiO_2:400\text{-}600\ H_2O$$

and "M" represents one or a mixture of two or more of sodium, potassium and calcium. More preferably, the reaction mixture comprises a composition, in terms of mole ratios of oxides comprising:

$$1\text{-}5\ R_2O:4\text{-}10\ M_{2/n}O:[Al_xFe_{(1-x)}]_2O_3:20\text{-}80\ SiO_2:400\text{-}600\ H_2O$$

Most preferably the reaction mixture contains essentially no aluminum other than that which may be present as an impurity in the reagents which provide the other oxide constituents, wherein "x" has a value of from zero to 0.5.

It will be understood, however, the FeSO-35 may be formed by the addition of seed crystals of a levynite-type crystal structure to the reaction mixture to expedite crystallization and such a seeding process is a part of a preferred synthesis procedure. Of course, the use of previously prepared FeSO-35 compositions as the seed crystals can greatly reduce the amount of aluminum imparted to the reaction mixture as a consequence of such a seeding procedure. When FeSO-35 is prepared by the use of seed crystals, preferably seed crystals in an amount of at least 0.001%, and more preferably at least 0.1% up to 10% based on the solid oxide weight of the other constituents of the reaction mixture, are employed.

In preparing the reaction mixture, the conventional reactants used in zeolite synthesis are, in general, suitably employed. Iron can be imparted as salts such as $FeCl_3$, $Fe(NO_3)_3$, iron acetate, iron oxyhydroxide, sodium ferrate and the like. Sources of silica include any reactive form of amorphous silica such as silica gel, precipitated silica, fumed silica, silica sol, silica aerogel and also alkali metal silicates. If aluminum is intentionally added, it can be in the form of alpha alumina, gamma alumina, sodium aluminate, aluminum alkoxide, alumina trihydrate, boehmite and the like. The alkali metal and/or alkaline earth metals are preferably added as the hydroxide, but water-soluble salts of the metals can be used. The organic templating agent, R, has been described hereinabove.

The reaction can be carried out under static or stirred conditions, at a temperature in the range of 100°C to 250°C and under autogenous pressure in a sealed reactor. The reactor is preferably lined with an inert plastic material such as polytetrafluoroethylene.

Although it has not been clearly established, it is believed that FeSO-35 is structurally related to the mineral zeolite levynite even though it differs substantially in chemical composition by virtue of the presence of tetrahedral $FeO_2^-$ structural units. The composition is found to have a hydrophilic adsorptive nature and to exhibit a substantial acidity of the type useful in the catalytic conversion of hydrocarbons. Accordingly, it is useful both as an adsorbent and a catalyst or catalyst base in the same applications

heretofore utilizing zeolites generally and small pore zeolites specifically.

Example 1

(a) A reaction mixture was prepared by combining 13.9 grams of iron nitrate nonahydrate ($Fe(NO_3)_3 \cdot 9H_2O$) with 50.4 grams of aqueous methylquinuclidine (MeQ), (49 wt% MeQ), and 95.3 grams of Ludox LS (an aqueous silica sol (30 wt.% $SiO_2$)). The mixture was well mixed. To this mixture was further added a solution of 11.0 grams of sodium hydroxide (NaOH) in 24.9 grams of water and the mixture stirred until homogenous. The composition* of the final reaction mixture in molar oxide ratios was:

$5.0(MeQ)_2O:Fe_2O_3:27.6\ SiO_2:8.0\ Na_2O : 400\ H_2O$

The reaction mixture was placed in a stainless steel pressure vessel lined with an inert plastic material (polytetrafluoroethylene) and heated in an oven at 200°C at the autogenous pressure for 46.0 hours. The solid reaction product was recovered by centrifugation, washed with water, and dried in air at 100°C.

(b) A portion of the solid product of part (a) was analyzed by X-ray analysis. This product had an X-ray powder diffraction pattern characterized by the following data wherein $I/I_o$ is the relative intensity and "d" the interplanar spacing:

*The template is reported here and may be reported in the following examples as the cation or as the cation associated in the oxide form. Thus, in the formula $(MeQ)_2O$ the MeQ corresponds to the methylquinuclidine cation.

TABLE A

| 2θ | d(A) | 100 x I/Io |
|---|---|---|
| 8.8 | 10.05 | 19 |
| 11.1 | 7.97 | 45 |
| 11.8 | 7.50 | 2 |
| 13.5 | 6.56 | 28 |
| 13.9* | 6.37 | 9 |
| 16.1 | 5.50 | 8 |
| 17.4 | 5.10 | 85 |
| 17.9 | 4.96 | 13 |
| 19.2* | 4.62 | 15 |
| 20.2* | 4.40 | 10 |
| 21.1 | 4.21 | 53 |
| 22.1 | 4.02 | 100 |
| 23.4 | 3.80 | 25 |
| 24.2* | 3.68 | 5 |
| 25.1 | 3.548 | 5 |
| 25.7* | 3.466 | 4 |
| 26.0 | 3.427 | 5 |
| 27.1 | 3.290 | 2 |
| 28.6 | 3.121 | 48 |
| 29.3 | 3.048 | 12 |
| 29.9* | 2.988 | 28 |
| 30.8* | 2.903 | 11 |
| 31.8 | 2.814 | 8 |
| 32.4 | 2.763 | 38 |
| 34.6 | 2.592 | 10 |
| 35.4** | 2.536 | 15 |
| 36.3 | 2.475 | 13 |
| 37.9 | 2.374 | 2 |
| 39.7 | 2.270 | 3 |
| 41.0** | 2.201 | 5 |
| 42.2 | 2.141 | 5 |
| 42.7** | 2.118 | 10 |
| 44.4* | 2.040 | 5 |
| 44.8 | 2.023 | 5 |
| 45.6* | 1.989 | 3 |
| 48.0 | 1.895 | 4 |
| 48.6* | 1.873 | 4 |
| 49.7 | 1.834 | 4 |
| 51.5 | 1.774 | 8 |
| 52.9* | 1.731 | 3 |
| 55.4 | 1.658 | 5 |

* Impurity from another species
**May contain impurity from another species

(c) A portion of the product of part (b) was calcined in air at about 550°C for 3.25 hours. This calcined product had an X-ray powder diffraction pattern characterized by the following data:

TABLE B

| 2θ | d(A) | 100 I/Io |
|---|---|---|
| 8.0* | 11.05 | 2 |
| 8.7 | 10.16 | 12 |
| 9.8* | 9.03 | 3 |
| 11.0 | 8.04 | 100 |
| 11.6 | 7.63 | 7 |
| 12.2* | 7.25 | 3 |
| 13.5 | 6.56 | 59 |
| 13.8* | 6.42 | 9 |
| 16.0 | 5.54 | 2 |
| 17.4 | 5.10 | 22 |
| 19.2* | 4.62 | 6 |
| 19.8* | 4.48 | 4 |
| 20.2* | 4.40 | 5 |
| 21.0 | 4.23 | 32 |
| 22.1 | 4.02 | 39 |
| 23.5 | 3.79 | 13 |
| 24.4* | 3.65 | 3 |
| 25.1 | 3.548 | 5 |
| 26.0 | 3.427 | 3 |
| 27.1 | 3.290 | 11 |
| 28.6 | 3.121 | 32 |
| 29.4 | 3.038 | 10 |
| 30.0* | 2.909 | 10 |
| 30.8* | 2.973 | 8 |
| 31.8 | 2.814 | 5 |
| 32.4 | 2.763 | 25 |
| 34.7 | 2.585 | 9 |
| 35.4** | 2.536 | 8 |
| 36.2** | 2.481 | 8 |
| 38.0 | 2.368 | 3 |
| 41.2** | 2.196 | 3 |
| 42.2 | 2.141 | 3 |
| 42.9** | 2.108 | 2 |

* Impurity from another species
**May contain impurity from another species

TABLE B (con't)

| | | |
|---|---|---|
| 45.1 | 2.010 | 2 |
| 48.2 | 1.888 | 2 |
| 50.1 | 1.821 | 2 |
| 51.8 | 1.765 | 3 |
| 53.0* | 1.728 | 2 |
| 55.5 | 1.656 | 3 |

* Impurity from another species
**May contain impurity from another species

(c) Adsorption capacities were measured on the calcined product of part (c) using a standard McBain-Bakr gravimetric adsorption apparatus. The following data were obtained on a sample activated at 350°C:

| | Kinetic Diameter, A | Pressure, Torr | Temp°C | Wt.% Adsorbed |
|---|---|---|---|---|
| $O_2$ | 3.46 | 108 | -183 | 11.6 |
| $O_2$ | 3.46 | 730 | -183 | 12.5 |
| $H_2O$ | 2.65 | 4.6 | 24 | 8.0 |
| $H_2O$ | 2.65 | 19.5 | 23 | 12.7 |
| n-hexane | 4.3 | 102 | 24 | 3.5 |

The pore size of the calcined product is greater than about 4.3A as shown by adsorption of n-hexane, kinetic diameter of 4.3A.

Example 2

(a) A reaction mixture was prepared by combining 16.2 grams of iron nitrate nonahydrate ($Fe(NO_3)_3 \cdot 9H_2O$) with 57.1 grams of aqueous methyl quinuclidine (25 wt% MeQ) and 110.5 grams of an aqueous silica sol (30 wt.% $SiO_2$) and mixing well. To the resulting mixture was added 12.8 grams of sodium hydroxide (NaOH) in 15.9 grams of water and the mixture stirred until a homogenous mixture was observed. The

composition of the final homogeneous reaction mixture in terms of molar oxide ratios was:

$2.5(MeQ)_2O:Fe_2O_3:27.6\ SiO_2:8.0\ Na_2O:400\ H_2O$

The reaction mixture was placed in a stainless steel pressure vessel lined with an insert plastic material (polytetrafluoroethylene) and heated for 64 hours in an oven at 150°C at the autogenous pressure. The solid reaction product was recovered by centrifugation, washed with water and dried in air at 100°C. The major product of the solids had an X-ray diffraction pattern characterized by the following data:

TABLE C

| 2θ | d(A) | 100 I/Io |
|---|---|---|
| 8.8 | 10.05 | 12 |
| 11.1 | 7.97 | 42 |
| 11.8 | 7.50 | 2 |
| 13.4 | 6.61 | 20 |
| 16.1 | 5.50 | 6 |
| 17.5 | 5.07 | 83 |
| 17.9(sh) | 4.96 | 13 |
| 21.0 | 4.23 | 55 |
| 22.0 | 4.04 | 100 |
| 23.4 | 3.80 | 27 |
| 25.1 | 3.548 | 7 |
| 25.9 | 3.440 | 2 |
| 27.0 | 3.302 | 17 |
| 28.6 | 3.121 | 48 |
| 29.3 | 3.048 | 8 |
| 31.7(sh) | 2.823 | 8 |
| 32.3 | 2.772 | 38 |
| 34.6 | 2.592 | 11 |
| 35.2 | 2.550 | 2 |
| 36.0 | 2.495 | 4 |
| 37.2 | 2.417 | 2 |
| 38.0 | 2.368 | 2 |
| 39.7 | 2.270 | 2 |
| 42.2 | 2.141 | 4 |

sh = shoulder

TABLE C (con't)

| | | |
|---|---|---|
| 42.7 | 2.118 | 4 |
| 43.0 | 2.103 | 4 |
| 44.8 | 2.023 | 3 |
| 48.1 | 1.892 | 4 |
| 48.7 | 1.870 | 4 |
| 49.8 | 1.831 | 5 |
| 51.5 | 1.774 | 8 |
| 55.6 | 1.653 | 5 |

(b) Chemical analysis of the product of part (a) gave the following chemical composition:

| | Wt.% |
|---|---|
| Carbon | 10.3 |
| $Na_2O$ | 2.1 |
| $Fe_2O_3$ | 10.8 |
| $SiO_2$ | 65.1 |
| LOI | 23.0 |

This gave a product composition in molar oxide ratios of:

0.51 $Na_2O$:$Fe_2O_3$:16.25 $SiO_2$:0.80 $(MeQ)_2O$

(c) A portion of the product of part (b) was calcined in air at 550°C for two (2) hours. This product was analyzed by X-ray and had an X-ray powder diffraction pattern characterized by the data in Table D.

TABLE D

| 2θ | d(A) | 100 I/Io |
|---|---|---|
| 8.6 | 10.28 | 30 |
| 10.9 | 8.12 | 100 |
| 11.7 | 7.56 | 5 |
| 13.4 | 6.61 | 68 |
| 16.0 | 5.54 | 4 |
| 17.4 | 5.10 | 35 |
| 17.8(sh) | 4.98 | 3 |
| 21.0 | 4.23 | 42 |

sh = shoulder

TABLE D con't

| 2θ | d(A) | 100 I/Io |
|---|---|---|
| 22.0 | 4.04 | 72 |
| 23.4 | 3.80 | 14 |
| 25.1 | 3.548 | 9 |
| 26.0 | 3.427 | 5 |
| 27.1 | 3.290 | 18 |
| 28.6 | 3.121 | 47 |
| 29.3 | 3.048 | 11 |
| 31.8(sh) | 2.814 | 9 |
| 32.4 | 2.763 | 42 |
| 34.6 | 2.592 | 10 |
| 35.2 | 2.550 | 2 |
| 36.0 | 2.495 | 4 |
| 37.2 | 2.417 | 2 |
| 38.0 | 2.368 | 2 |
| 42.2 | 2.141 | 2 |
| 42.9 | 2.108 | 3 |
| 44.8 | 2.023 | 1 |
| 48.2 | 1.888 | 3 |
| 48.8 | 1.866 | 3 |
| 49.9 | 1.828 | 2 |
| 51.5 | 1.774 | 6 |
| 52.8 | 1.734 | 2 |
| 55.7 | 1.650 | 4 |

sh = shoulder

(d) Adsorption capacities were measured on the calcined sample of part (c) using a standard McBain-Bakr gravimetric adsorption apparatus. The following data were obtained on a sample activated at 350°C:

| | Kinetic Diameter, A | Pressure, Torr | Temp(°C) | Wt.% Adsorbed |
|---|---|---|---|---|
| $O_2$ | 3.46 | 100 | -183 | 18.6 |
| $O_2$ | 3.46 | 734 | -183 | 21.3 |
| $H_2O$ | 2.65 | 4.6 | 24 | 11.7 |
| $H_2O$ | 2.65 | 18.5 | 24 | 17.4 |
| n-hexane | 4.3 | 98 | 24 | 9.4 |
| iso-butane | 5.0 | 755 | 24 | 0.2 |

From the above data the pore size was determined to be greater than about 4.3A, as shown by adsorption of n-hexane and less than about 5.0A, as shown by negligible adsorption of iso-butane.

Example 3

(a) FeSO-35 was prepared by combining 5.4 grams of iron nitrate nonahydrate, 19.0 grams of methylquinuclidine (25 wt.% MeQ) and 36.8 grams of an aqueous silica sol (30 wt.% $SiO_2$). The mixture was stirred until a homogenous mixture was observed. This mixture was mixed with a solution of 4.2 grams of sodium hydroxide and 0.3 grams of sodium aluminate ($Na_2O$ . $Al_2O_3 . 3H_2O$) in 17.3 grams of water. The mixture was stirred until a homogenous mixture was observed. The composition of the reaction mixture in molar oxide ratios was:

$$2.5(MeQ)_2O:Fe_2O_3:0.2Al_2O_3:27.6SiO_2:8.0Na_2O:500H_2O$$

The reaction mixture was placed in a stainless steel pressure vessel lined with an inert plastic material (polytetrafluoroethylene) and heated in an oven at 150°C at the autogenous pressure for 94 hours. The solid reaction product was recovered by centrifugation, washed with water, and dried in air at 100°C. A portion of the product was analyzed chemically and by X-ray analysis and found to be characterized as FeSO-35 consistent with the X-ray pattern set forth in Table II, supra.

(b) Chemical analysis of the product showed: 9.3 wt.% carbon; 3.0 wt.% $Na_2O$; 1.2 wt.% $Al_2O_3$; 9.5 wt.% $Fe_2O_3$; 61.9 wt.% $SiO_2$; and 24.3 wt.% LOI. This gave a product composition in molar oxide ratios of:

$0.81Na_2O:0.19Al_2O_3:Fe_2O_3:17.5SiO_2:0.82(MeQ)_2O$

(c) A portion of the product of part (a) was calcined in air at about 600°C for 2 hours. This calcined product was analyzed by X-ray and had an X-ray diffraction pattern characterized by the data of Table D, supra.

(d) The calcined sample of part (c) was employed to determine the adsorption capacities using a standard McBain-Bakr gravimetric adsorption apparatus. The following data were obtained on a sample activated at 350°C:

| | Kinetic Diameter, A | Pressure, Torr | Temp(°C) | Wt.% Adsorbed |
|---|---|---|---|---|
| $O_2$ | 3.46 | 100 | -183 | 15.2 |
| $O_2$ | 3.46 | 734 | -183 | 18.1 |
| $H_2O$ | 2.65 | 4.6 | 24 | 9.9 |
| $H_2O$ | 2.65 | 18.5 | 24 | 15.6 |
| n-hexane | 4.3 | 98 | 24 | 8.7 |
| iso-butane | 5.0 | 755 | 24 | 0.6 |

From the above data the pore size of the FeSO-35 was determined to be greater than about 4.3A and less than about 5.0A.

Examples 4-12

Reaction mixtures were prepared in each of Examples 4 to 12 in the manner of Example 2 using reaction mixtures corresponding to the following oxide mole ratios:

$aNa_2O:b(MeQ)_2O:cFe_2O_3:dSiO_2:eH_2O$

wherein the values of a, b, c, d and e in each example were as follows:

| Example # | a | b | c | d | e | Reaction Temp(°C) | Time (hours) |
|---|---|---|---|---|---|---|---|
| 4 | 8.0 | 5.0 | 1.0 | 27.6 | 400 | 200 | 234 |
| 5 | 8.0 | 2.5 | 1.0 | 27.6 | 400 | 200 | 64 |
| 6 | 8.0 | 2.5 | 1.0 | 50.0 | 600 | 200 | 64 |
| 7 | 8.0 | 1.25 | 1.0 | 27.6 | 400 | 150 | 208 |
| 8 | 8.0 | 1.25 | 1.0 | 27.6 | 400 | 200 | 45 |
| 9 | 8.0 | 2.5 | 1.0 | 20.0 | 500 | 150 | 596 |
| 10 | 8.0 | 2.5 | 1.0 | 20.0 | 500 | 200 | 45 |
| 11 | 8.0 | 2.5 | 1.0 | 80.0 | 800 | 200 | 45 |
| 12 | 4.0 | 2.5 | 1.0 | 27.6 | 500 | 150 | 596 |

FeSO-35 was found to be produced in each of the example as established by X-ray analysis.

Examples 13 and 14

In order to demonstrate the catalytic activity of FeSO-35, calcined samples from FeSO-35 compositions were prepared as set forth in examples 2 and 3 for examples 13 and 14, respectively, except that in example 13 the reaction mixture was heated at 150°C for 232 hours. The FeSO-35 compositions were then tested for catalytic cracking. The test procedure employed was the catalytic cracking of premixed two (2) mole % (percent) n-butane in helium stream in a 1/2" O.D. quartz tube reactor over up to about 5 grams (20-40 mesh) of the FeSO-35 sample to be tested. The sample was activated in situ for 60 minutes at 500°C under 200 $cm^3$/min dry helium purge. Then the two (2) mole % n-butane in helium at a flow rate of 50 $cm^3$/min was passed over the sample for 40 minutes with product stream analysis being carried out at 10 minute intervals. The pseudo-first-order rate constant ($k_A$) was then calculated to determine the catalytic activity of the FeSO-35. The $k_A$ values ($cm^3$/g min) obtained for the two FeSO-35 compositions were 3.7 and 1.2, respectively, showing FeSO-35 to be catalytically active for the conversion of organic feedstocks.

WHAT IS CLAIMED IS:

1. Microporous crystalline ferrosilicate composition having a chemical composition in the anhydrous state expressed in terms of molar oxide ratios of:

$$a\ M_{2/n}O : [Al_xFe_{(1-x)}]_2O_3 : b\ SiO_2$$

wherein "M" is at least one cation having the valence "n", "a" has a value of from zero to 2.0, "b" has a value of from 3 to 100, "x" has a value of from zero to 0.98, and having a characteristic X-ray diffraction pattern containing at least the d-spacings of Table I.

2. Composition according to claim 1 wherein the value of "a" is from zero to 1.0, the value of "b" is from 10 to 80, and the value of "x" is from zero to 0.5.

3. Composition according to claim 2 wherein the value of "a" is from zero to 1.0, "b" is from 10 to 50 and "x" is essentially zero.

4. Microporous crystalline ferrosilicate prepared by calcining the composition of claim 1 at a temperature in the range of from 350°C. up to the crystal destruction temperature of the ferrosilicate.

5. Microporous crystalline ferrosilicate prepared by calcining the composition of claim 2 at a temperature in the range from 350°C up to the crystal destruction temperature of the ferrosilicate.

6. Microporous crystalline ferrosilicate prepared by calcining the composition of claim 3 at a temperature in the range from 350°C. up to the crystal destruction temperature of the ferrosilicate.

7. Process for preparing a ferrosilicate of claim 1 which comprises preparing a reaction mixture having a composition in terms of molar oxide ratios of:

$0\text{-}10\ R_2O:1\text{-}15\ M_{2/n}O:[Al_xFe_{(1-x)}]_2O_3:10\text{-}200\ SiO_2:200\text{-}1000\ H_2O$

wherein M is an alkali metal or alkaline earth metal cation having the valence "n", and R is an organic templating agent, and "x" has a value of from zero up to 0.98, and maintaining said mixture at a temperature of from 100°C to 250°C under autogenous pressure until crystals of the ferrosilicate are formed.

8. Process according to claim 7 wherein "M" represents one or a mixture of sodium, and potassium, and the molar oxide ratios are:

$1\text{-}5\ R_2O:4\text{-}10\ M_{2/n}O:[Al_xFe_{(1-x)}]_2O_3$ :
$20\text{-}80\ SiO_2:400\text{-}600\ H_2O$

wherein "x" has a value of from zero to 0.5.

9. Process according to claim 7 wherein the value of "x" is zero.

10. Process according to claim 7 wherein the source of $Fe_2O_3$ is iron nitrate.

European Patent Office

# EUROPEAN SEARCH REPORT

0115031

Application number

EP 83 11 2834

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,A | US-A-4 208 305 (KOUWENHOVEN et al.)<br>* Claims 1-3, 10, 11, 13; example 1 *<br>--- | 1-10 | C 01 B 33/28<br>C 01 B 33/20 |
| D,A | EP-A-0 013 630 (MOBIL OIL)<br>* Claim 1 *<br>--- | 1,2 | |
| A | EP-A-0 040 016 (ICI)<br>* Example 1 *<br>--- | | |
| A | EP-A-0 030 751 (SHELL)<br>----- | | |
| | | | TECHNICAL FIELDS SEARCHED (Int. Cl. 3) |
| | | | C 01 B 33/00 |

The present search report has been drawn up for all claims

| Place of search | Date of completion of the search | Examiner |
|---|---|---|
| BERLIN | 02-04-1984 | KESTEN W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document